# EUROPEAN PATENT SPECIFICATION

(11) **EP 3 868 729 B1**
(45) Date of publication and mention of the grant of the patent: **01.07.2026**
(21) Application number: 19873991.4
(22) Date of filing: 16.05.2019
(51) Int. Cl.: C03C 15/00, C03C 17/34, C03C 27/10, C03C 19/00

(54) **LAMINATED GLASS AND PREPARATION METHOD THEREFOR, HOUSING OF ELECTRONIC DEVICE, AND ELECTRONIC DEVICE**
VERBUNDGLAS UND HERSTELLUNGSVERFAHREN DAFÜR, GEHÄUSE EINER ELEKTRONISCHEN VORRICHTUNG UND ELEKTRONISCHE VORRICHTUNG
VERRE FEUILLETÉ ET SON PROCÉDÉ D'ÉLABORATION, BOÎTIER DE DISPOSITIF ÉLECTRONIQUE, ET DISPOSITIF ÉLECTRONIQUE

(30) Priority: 18.10.2018 CN 201811214931
(43) Date of publication of application: 25.08.2021
(73) Proprietor: BYD Company Limited, Guangdong 518118 (CN)
(72) Inventor: WANG, Haixia, Shenzhen, Guangdong 518118 (CN); MA, Lan, Shenzhen, Guangdong 518118 (CN); CHEN, Liang, Shenzhen, Guangdong 518118 (CN); SHI, Liliang, Shenzhen, Guangdong 518118 (CN)
(74) Representative: Gulde & Partner
(86) International application number: PCT/CN2019/087231
(87) International publication number: WO 2020/077995

(56) References cited:
- CN-A- 101 903 185
- CN-A- 103 101 391
- CN-U- 203 007 139
- CN-Y- 2 828 036
- DE-A1- 102006 057 049
- DE-A1- 102006 057 049
- JP-A- 2015 209 368
- US-A- 2 115 409
- US-A- 2 115 433
- US-A- 5 959 793
- US-A1- 2010 028 585
- US-A1- 2016 004 033

## Description

### FIELD

This application relates to the field of electronic device technologies, and in particular, to laminated glass and a preparation method thereof, an electronic device housing, and an electronic device.

### BACKGROUND

The practical application of existing laminated glass is basically limited to fields such as construction and automobiles, but due to good mechanical properties, good anti-drop performance, and the like thereof, the laminated glass also has broad application prospects in electronic devices. However, at present, the laminated glass is decorated mostly by using a method such as performing screen-printing or wire-embedding on single-layer glass, resulting in a relatively monotonous decorative effect, and has an appearance that cannot satisfy appearance requirements of an electronic device housing. Therefore, at present, the decoration technology related to laminated glass still needs to be improved. US 2016/0004033 A1 describes a glass mirror apparatus and methods of manufacturing the same. US 5 959 793 A discloses a laminated safety mirror comprising first and second sheets of glass being bonded through a bonding sheet. The first sheet has a mirror coating and a protective paint thereon. US 2 115 433 A and US 2 115 409 A disclose a laminate comprising two glass panes joined by an intermediate layer. Each pane comprises transparent coatings on the surfaces facing the intermediate layer and design traceries.

### SUMMARY

The invention is defined by the appended claims. The description that follows is subjected to this limitation. Any disclosure lying outside the scope of said claims is only intended for illustrative as well as comparative purposes. This application provides laminated glass capable of achieving an appearance with different etched textures, different colors, and different patterns superimposed, and presenting multiple levels, a strong three-dimensional sense, a special optical color, or a gorgeous appearance effect.

According to an aspect of this application, this application provides laminated glass as defined in claim 1. According to an embodiment of this application, the laminated glass includes at least two glass members and at least one adhesive film disposed in a stacked manner, where the glass members and the adhesive film are alternately disposed, where decorative layers are provided on surfaces of at least two of the glass members facing toward the adhesive film, and at least two of the decorative layers independently include an etched texture. In the laminated glass, decorative layers are provided on surfaces of at least two of the glass members facing toward the adhesive film, to achieve an appearance with different etched textures, different colors, and different patterns superimposed, and present a special optical color or a gorgeous appearance effect. In addition, different textures, optical coating layers, and patterns are located on different planes and at different distances from a user, to present a special appearance effect with multiple levels and a strong three-dimensional sense. The laminated glass can be effectively applied to an electronic device, to satisfy the appearance requirements of the electronic device and the user's pursuit of beauty, thereby improving user experience.

According to another aspect of this application, this application provides an electronic device housing as defined in claim 8. According to an embodiment of this application, at least a part of the electronic device housing is formed of the foregoing laminated glass. Therefore, the electronic device housing has an appearance with different textures, colors, and patterns superimposed, to achieve multiple levels, a special optical color, and a gorgeous visual effect, thereby greatly satisfying the user's pursuit of beauty, and improving user experience.

According to still another aspect of this application, this application provides a method for preparing the foregoing laminated glass as defined in claim 9. According to an embodiment of this application, the method includes: providing at least two glass members; forming decorative layers on at least two surfaces of the glass members; placing the glass members and an adhesive film alternately in a stacked manner, to obtain a stacked structure; and sequentially vacuumizing, heating, and pressurizing the stacked structure to obtain laminated glass. Therefore, the method is simple in terms of steps, easy to operate, mature in terms of a process, and suitable for industrial production. In addition, the obtained laminated glass has an appearance with different textures, patterns, and colors superimposed, and presents multiple levels, a special optical color, and gorgeous visual effect.

### BRIEF DESCRIPTION OF THE DRAWINGS

FIG. 1 is a schematic cross-sectional structural diagram of laminated glass according to an embodiment of this application;
FIG. 2 is a schematic cross-sectional structural diagram of laminated glass according to another embodiment of this application;
FIG. 3 is a schematic cross-sectional structural diagram of laminated glass according to another embodiment of this application;
FIG. 4 is a schematic cross-sectional structural diagram of laminated glass according to another embodiment of this application;
FIG. 5 is a schematic cross-sectional structural diagram of laminated glass according to another embodiment of this application;
FIG. 6 is a schematic flowchart of a method for preparing laminated glass according to an embodiment of this application;
FIG. 7 is a schematic cross-sectional structural diagram of laminated glass according to another embodiment of this application; and
FIG. 8 is a schematic cross-sectional structural diagram of laminated glass according to another embodiment of this application.

### DETAILED DESCRIPTION

Embodiments of this application are described in detail below. The embodiments described below are exemplary, and are only intended to explain this application rather than being construed as a limitation to this application. The embodiments in which specific technologies or conditions are not indicated shall be carried out in accordance with the technologies or conditions described in the literature in the art or in accordance with the product specification. The reagents or instruments for which no manufacturers are noted are all common products commercially available from the market.

According to an aspect of this application, this application provides laminated glass. The laminated glass includes at least two glass members and at least one adhesive film disposed in a stacked manner, where the glass members and the adhesive film are alternately disposed, where decorative layers are provided on surfaces of at least two of the glass members facing toward the adhesive film, and at least two of the decorative layers independently include an etched texture. The inventor found that in the laminated glass, decorative layers are provided on surfaces of at least two of the glass members facing toward the adhesive film, to achieve an appearance with two or more layers of different etched textures, different colors, and different patterns superimposed, and present a special optical color or a gorgeous appearance effect. In addition, different textures, optical coating layers, and patterns are located on different planes and at different distances from a user, to present a special appearance effect with multiple levels and a strong three-dimensional sense. The laminated glass can be effectively applied to an electronic device, to satisfy the appearance requirements of the electronic device and the user's pursuit of beauty, thereby improving user experience.

It should be noted that the laminated glass of this application may include two or more glass members, where the glass members and the adhesive film are alternately disposed, and both an uppermost layer and a lowermost layer of the laminated glass are glass members. In addition, the description "decorative layers are provided on surfaces of at least two of the glass members facing toward the adhesive film" used in this specification means that decorative layers are provided on at least two of upper surfaces and lower surfaces of all glass members other than an upper surface of an uppermost glass member and a lower surface of a lowermost glass member in the laminated glass. For example, when the laminated glass includes two glass members, decorative layers are provided on a lower surface of an uppermost glass member and an upper surface of the uppermost glass member; when the laminated glass includes three glass members, decorative layers are provided on at least two of an upper surface of a lowermost glass member, an upper surface of a middle glass member, a lower surface of the middle glass member, and a lower surface of an uppermost glass member; and when the laminated glass includes more glass members, the remaining can be deduced by analogy.

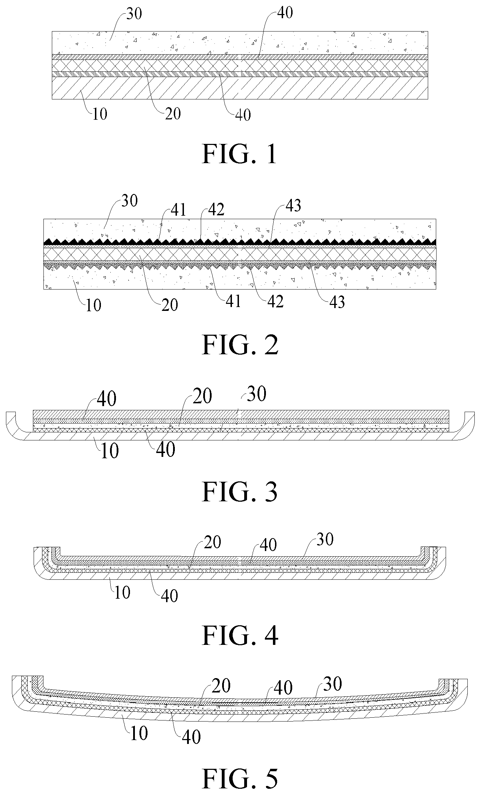

According to an embodiment of this application, referring to FIG. 1 and FIG. 2, the laminated glass includes a first glass member 10, a first adhesive film 20, and a second glass member 30 disposed in a stacked manner from bottom to top, where decorative layers 40 are provided on both an upper surface of the first glass member 10 and a lower surface of the second glass member, and the decorative layers 40 include at least one of an etched texture 41, an optical coating layer 42, and a pattern layer 43. In the laminated glass, decorative layers are provided on surfaces of the first glass member and the second glass member close to the first adhesive film, to achieve an appearance with different etched textures, different colors, and different patterns superimposed, and present a special optical color or a gorgeous appearance effect. In addition, different textures, optical coating layers, and patterns are located on different planes and at different distances from a user, to present a special appearance effect with multiple levels and a strong three-dimensional sense. The laminated glass can be effectively applied to an electronic device, to satisfy the appearance requirements of the electronic device and the user's pursuit of beauty, thereby improving user experience.

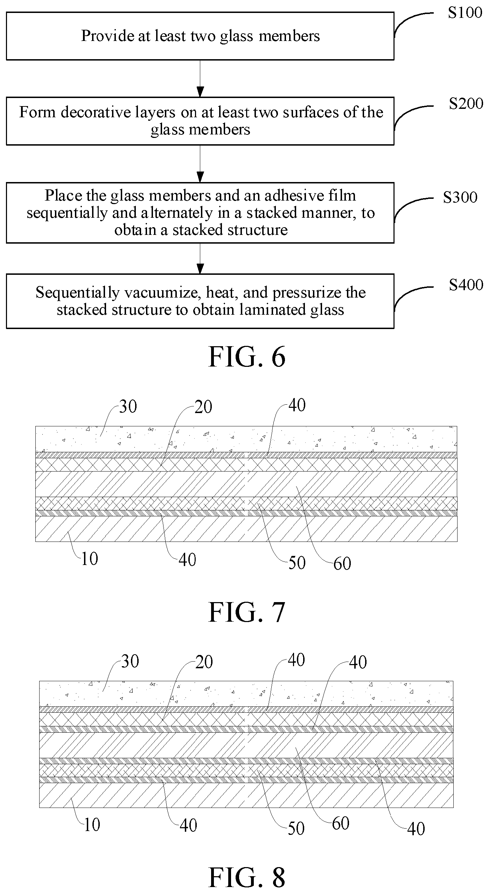

According to an embodiment of this application, referring to FIG. 7 and FIG. 8, the laminated glass includes a first glass member 10, a second adhesive layer 50, a third glass member 60, a first adhesive layer 20, and a second glass member 30 disposed in a stacked manner from bottom to top, where the decorative layers are provided on at least two of an upper surface of the first glass member 10, a lower surface of the second glass member 20, an upper surface of the third glass member 60, and a lower surface of the third glass member 60 (FIG. 7 and FIG. 8 only exemplarily show two cases, and cannot be understood as a limitation to this application). In the laminated glass, at least two decorative layers are provided on different surfaces, to achieve an appearance with different etched textures, different colors, and different patterns superimposed, and present a special optical color or a gorgeous appearance effect. In addition, different textures, optical coating layers, and patterns are located on different planes and at different distances from a user, to present a special appearance effect with multiple levels and a strong three-dimensional sense. The laminated glass can be effectively applied to an electronic device, to satisfy the appearance requirements of the electronic device and the user's pursuit of beauty, thereby improving user experience.

According to an embodiment of this application, specific components of at least two glass members (including the first glass member, the second glass member, and the third glass member) are not limited, and may be flexibly selected by a person skilled in the art according to requirements. For example, the at least two glass members include, but are not limited to, cover glass (including high-alumina high-alkali aluminosilicate glass, soda-lime silica glass, and the like), touchscreen substrate glass (such as alkali and heavy metal (arsenic, antimony, and barium)-free alkaline earth sodium pyroborate-aluminosilicate glass, soda glass, and neutral borosilicate glass, and the like), and TFT display screen substrate glass (including, but not limited to, alkali and heavy metal (arsenic, antimony, and barium)-free alkaline earth sodium pyroborate-aluminosilicate glass of brands such as Corning Eagle XG, Eagle XG Slim, and Willow), and the like that are independent of each other. In some embodiments of this application, to satisfy the use requirements for mechanical properties such as strength, strengthening, such as chemical strengthening, can be performed on the glass members, so that the strength of the glass members can be significantly improved, and better usability can be obtained.

According to an embodiment of this application, thicknesses of at least two glass members may independently be 0.2 mm to 0.5 mm, for example, 0.2 mm, 0.25 mm, 0.3 mm, 0.35 mm, 0.4 mm, 0.45 mm, or 0.5 mm. In some embodiments, the thicknesses of at least two glass members in the laminated glass may be the same. In some other embodiments, the thicknesses of at least two glass members may be different. Specifically, selections may be made flexibly according to actual requirements. Therefore, the use requirements under different conditions can be satisfied, and glass members within this thickness range are matched with each other. The mechanical properties, appearance, and optical properties of the laminated glass are better than those of glass members with other thickness ranges, so that not only the use requirements of electronic device housing can be satisfied, but also a more changeable, gorgeous, and colorful appearance with a stronger three-dimensional sense and a better layering sense can be achieved in combination with the decorative layers. Compared with the foregoing thickness range, if the thicknesses of the glass members are excessively large, the thickness of the laminated glass is relatively large, and the appearance is unsightly, which is not suitable for application to an electronic device housing, a touchscreen, or a display screen; and if the thicknesses of the glass members are excessively small, mechanical properties of the laminated glass are relatively poor, and the use requirements cannot be satisfied.

According to an embodiment of this application, specific shapes and structures of at least two glass members are not limited, and the at least two glass members may include, but are not limited to, flat glass members, 2.5D glass members, 3D glass members, other glass members with complex structures and shapes, and the like. The shapes and structures of at least two glass members in the laminated glass may be the same or different. For example, when the laminated glass includes the first glass member, the first adhesive film, and the second glass member, the first glass member and the second glass member may be two flat glass members with different shapes, or the first glass member may be a flat glass member and the second glass member may be a 2.5D glass member. In some embodiments of this application, to obtain a better use effect, the shapes of the first glass member, the second glass member, and the first adhesive film match each other corresponding positions. For example, when the first glass member 10 is a 2.5D glass member and the second glass member 30 is a flat glass member, a flat surface of the flat glass member and a flat surface of the 2.5D glass member are disposed correspondingly in a stacked manner through the first adhesive film 20 (referring to FIG. 3 for a schematic structural diagram). **In** some embodiments of this application, shapes and structures of the first glass member and the second glass member may be consistent. Therefore, the first glass member and the second glass member can be well disposed in a matching manner and tightly combined to obtain laminated glass with substantially no bubbles, a small profile tolerance and low flatness tolerance, and good usability. Specifically, in some embodiments of this application, the first glass member 10 and the second glass member 30 are both flat glass (referring to FIG. 1 and FIG. 2 for schematic structural diagrams). **In** some other embodiments, the first glass member 10 and the second glass member 30 are both 2.5D glass (referring to FIG. 4 for a structural schematic diagram). **In** still some other embodiments, the first glass member 10 and the second glass member 30 are both 3D glass (referring to FIG. 5 for a structural schematic diagram). For the foregoing glass members with different structures, the first adhesive film may be a flat film layer, or may be a film layer with a structure and a shape consistent with those of the glass members. Because the first adhesive film has relatively good processability, the first adhesive film can well alleviate the problem of mismatching between the first glass member and the second glass member, so that the three are tightly combined. **In** addition, the first adhesive film can greatly improve the strength and anti-drop performance of the glass members. **In** addition, during breakage, the glass does not splatter, so that the safety is relatively good. Certainly, a person skilled in the art can understand that when the laminated glass includes three or more glass members, specific shapes and structures thereof are similar to those of the first glass member and the second glass member. Details are not described herein again.

According to an embodiment of this application, referring to FIG. 2, the decorative layers 40 include an etched texture 41, an optical coating layer 42, and a pattern layer 43. However, it should be noted that in practical applications, the decorative layers 40 may be single-layer structures, that is, only include the etched texture 41, the optical coating layer 42, or the pattern layer 43, or may be double-layer structures, that is, only include the etched texture 41 and the optical coating layer 42, the etched texture 41 and the pattern layer 43, or the optical coating layer 42 and the pattern layer 43, or may be three-layer structures, that is, include the etched texture 41, the optical coating layer 42, and the pattern layer 43 together. Layer structures of at least two decorative layers in the laminated glass may be the same or different. For example, a plurality of decorative layers may be single-layer, double-layer, or three-layer structures; or one decorative layer may be a single-layer structure, and another decorative layer may be a double-layer structure, and so on. Specifically, selections may be made flexibly according to a target appearance effect.

According to an embodiment of this application, a stacking sequence and positions of the etched texture, the optical coating layer, and the pattern layer in the decorative layers are not particularly limited, and may be flexibly selected by a person skilled in the art according to requirements as long as the production and use requirements are satisfied. When the decorative layers include the etched texture, because the etched texture is usually formed by etching a surface of a glass member, that is, the etched texture is directly formed on the surface of the glass member, so the etched texture is disposed close to the glass member. The optical coating layer and the pattern layer are located on a side of the etched texture close to the adhesive film, and relative positions of the optical coating layer and the pattern layer may be flexibly adjusted. Therefore, in some embodiments of this application, the decorative layers 40 may include the etched texture 41, the pattern layer 43, and the optical coating layer 42 disposed in a stacked manner sequentially, or may include the etched texture 41, the optical coating layer 42, and the pattern layer 43 disposed in a stacked manner sequentially. When the decorative layers do not include the etched texture, the decorative layers may include the optical coating layer and the pattern layer disposed in a stacked manner, where the optical coating layer may be directly disposed on a surface of a glass member, or the pattern layer may be directly disposed on a surface of a glass member. In addition, layer structures of at least two decorative layers in the laminated glass and stacking sequences of layers therein may be the same or different.

According to an embodiment of this application, the etched texture may be stripes and lines of any shape. For example, stripes and lines may form patterns, that is, a pattern texture; or may be stripes in various shapes, that is, a striped texture; or the etched texture may be used to make the glass members present a matte effect, that is, a matte texture; or a thickness of a texture (gradually increases and so on), a size (gradually decreases and so on), and a space between adjacent textures (gradually increases or decrease and so on) may be adjusted, or a matte level (gradually increases or decreases and so on) and the like are gradually changed, to present a gradient texture. Moreover, shapes of etched textures in at least two decorative layers in the laminated glass may be the same or different, and orthographic projections thereof on the glass members may overlap, not overlap at all, or partially overlap, and so on. Therefore, a plurality of etched textures may be used to achieve an appearance effect of matching and superimposition of different positions, different shapes, and the like.

According to an embodiment of this application, the optical coating layers may be some coating layers known in the art, may be flexibly selected by a person skilled in the art according to the use requirements, and for example, include, but are not limited to, at least one of a titanium oxide coating layer, a silicon oxide coating layer, and a zirconium oxide coating layer. A specific formation method may be vacuum evaporation coating, magnetron sputtering coating, or the like. **In** some embodiments of this application, because optical coating layers with different materials and thicknesses are all different in terms of a refractive index, a color, and the like, a sequence and a quantity of superimposed layers of the titanium oxide coating layer, the silicon oxide coating layer, and the zirconium oxide coating layer may be adjusted to achieve richer coating appearance effects such as a gradient color effect. **In** some embodiments of this application, the coating layers may be transparent. Changes in optical properties, such as a refractive index of the coating layer, may be adjusted, and further combined with a color of a base color layer, to achieve a gorgeous and colorful appearance effect. **In** some other embodiments of this application, the optical coating layer may have a predetermined color, so that the laminated glass can have an appearance effect with different colors superimposed, and present more gorgeous and colorful optical colors. Specifically, layer structures, materials, thicknesses, and predetermined colors of optical coating layers in at least two decorative layers in the laminated glass may be the same or different. The predetermined colors may independently include colors such as red, yellow, blue, green, purple, and pink, or may be gradient colors in which a plurality of colors coordinate. In addition, some positions on the optical coating layer may alternatively have predetermined colors, and the positions with the predetermined colors may be flexibly selected, to achieve coordination of different colors in a specific three-dimensional space, thereby further presenting a three-dimensional, multi-level, gorgeous and colorful appearance effect.

According to an embodiment of this application, a specific shape of the pattern layer is not particularly limited, and may be flexibly selected by a person skilled in the art according to an appearance that satisfies requirements of a user. Specifically, shapes of the pattern layers may be independently geometric patterns (such as various geometric figures), object graphics (such as cartoon patterns, character patterns, plant patterns, and flower patterns), and identification information (such as brand logos, model logos, and operator logos). In some specific embodiments of this application, when the laminated glass is actually used, a glass member located in an uppermost layer is disposed close to a user. To make the logo information more prominent and obvious, a pattern layer located in the uppermost layer may include a mirror silver logo. In addition, because a viewing direction of the user is from top to bottom, the pattern layer located in the uppermost layer may be a window pattern disposed around the glass members, to effectively identify a window region. In some embodiments of this application, the pattern layer is formed of ink. Because the ink is opaque, and blocks color patterns below, to better achieve a superimposed appearance, when the laminated glass includes at least two pattern layers, orthographic projections of the at least two pattern layers on the glass members are at least partially non-overlapping. In some specific embodiments, the orthographic projections of at least two of the pattern layers on the glass members do not have an overlapping region. Therefore, the user can intuitively see an appearance effect with at least two pattern layers superimposed, and a richer and more three-dimensional appearance effect with more levels is achieved.

According to an embodiment of this application, to obtain better optical properties and mechanical properties, the adhesive films (including the first adhesive film and the second adhesive film) may include at least one of polyvinyl butyral (PVB), an ethylene-methacrylate copolymer, an ionic film (SGP, such as an ionic film containing about 1% of sodium ion), an ethylene-vinyl acetate copolymer (EVA) film, thermoplastic polyurethane elastomer rubber (TPU), and propylene oxide (PO). Therefore, the adhesive films have relatively good adhesion and transmittance, and can make the obtained laminated glass have relatively good strength and anti-drop performance. According to an embodiment of this application, the thickness of the adhesive films may be 25 microns to 100 microns, such as 25 microns, 30 microns, 35 microns, 40 microns, 45 microns, 50 microns, 55 microns, 60 microns, 65 microns, 70 microns, 75 microns, 80 microns, 85 microns, 90 microns, 95 microns, or 100 microns. Therefore, relatively good optical properties and mechanical properties, such as strength and anti-drop performance, can be ensured, and the problem of mismatching between two adjacent glass members can be better alleviated. In addition, the thickness is relatively small, which can satisfy the use requirements of an electronic device housing.

According to an embodiment of this application, except for a position corresponding to the pattern layer formed of ink, the other parts of the laminated glass are all non-opaque to some extent. To better present the appearance effect, a base color layer is usually needed. In this embodiment of this application, to not affect the multi-level and three-dimensional appearance effect, a base color layer is provided on a lower surface of a glass member located in a lowermost layer, to better present a richer appearance effect without blocking the decorative layers. Specifically, a specific color of the base color layer is not particularly limited, and may be flexibly selected by a person skilled in the art according to actual requirements. Moreover, the base color layer may be a single-layer structure or a multi-layer structure, for example, may be a lacquer layer or an ink layer with a predetermined color, or may include a plurality of base lacquer layers and a plurality of color lacquer layers.

According to another aspect of this application, this application provides an electronic device housing. According to an embodiment of this application, at least a part of the electronic device housing is formed of the foregoing laminated glass. Therefore, the electronic device housing has an appearance with different textures, colors, and patterns superimposed, to achieve multiple levels, a special optical color, and a gorgeous visual effect, thereby greatly satisfying the user's pursuit of beauty, and improving user experience.

According to an embodiment of this application, a specific shape, a structure, and a size of the electronic device housing are not particularly limited, and may be flexibly selected by a person skilled in the art according to the specific requirements of the electronic device. Specifically, referring to FIG. 1 to FIG. 5, the electronic device housing includes, but is not limited to, a flat structure, a 2.5D structure, and a 3D structure.

According to another aspect of this application, this application provides an electronic device. According to an embodiment of this application, the electronic device includes the foregoing electronic device housing. Therefore, the electronic device has an appearance with different textures, colors, and patterns superimposed, to achieve multiple levels, a special optical color, and a gorgeous visual effect, thereby greatly satisfying the user's pursuit of beauty, and improving user experience.

According to an embodiment of this application, a specific type of the electronic device is not particularly limited, and may be any known electronic device, for example, including, but not limited to, a mobile phone, a tablet computer, a game console, a wearable device, an AR device, and a VR device. Moreover, a person skilled in the art can understand that, in addition to the foregoing electronic device housing, the electronic device further includes structures and components necessary for a conventional electronic device. A mobile phone is used as an example. The mobile phone further includes a touchscreen, a display screen, a CPU, a camera module, a fingerprint recognition module, a sound processing system, a necessary circuit structure, and the like. Details are not described herein.

According to still another aspect of this application, this application provides a method for preparing the foregoing laminated glass. According to an embodiment of this application, referring to FIG. 6, the method includes:

S100: Provide at least two glass members.

According to an embodiment of this application, the glass members included in this step are consistent with those in the foregoing description, and details are not described herein again.

According to an embodiment of this application, the preparation method of the glass members is not particularly limited, and may be flexibly selected by a person skilled in the art according to requirements. Specifically, in some embodiments of this application, processes, such as cutting, computer numerical control machining, polishing, edge-sweeping, and chemical strengthening, can be performed on the glass members sequentially, to obtain flat glass members. For 2.5D or 3D glass members, a hot bending process may be added before the foregoing polishing process. Therefore, glass members with predetermined shapes and sizes can be obtained conveniently and quickly, the process is mature, and industrial production is easy.

S200. Form decorative layers on at least two surfaces of the glass members.

According to an embodiment of this application, the forming decorative layers includes at least one of the following steps (1), (2) and (3): (1) etching the upper surface of the foregoing first glass member to form an etched texture; (2) forming an optical coating layer by using a vacuum coating or chemical coating method; and (3) forming a pattern layer by using a screen-printing method.

According to an embodiment of this application, the etched texture may be formed by etching the surface of the glass member by using a wet etching or dry etching method. The wet etching may be performed by making the surface of the glass member in contact with an etching solution, and the dry etching may be performed by etching the surface of the glass member by using an etching gas. When the etched texture has a predetermined shape, a protective pattern may be formed in advance on the upper surface of the glass member (for example, formed by using a photolithography method), subsequently, surfaces of glass members that are not protected by the protective pattern are etched, and then the protective pattern is removed, to obtain the etched texture. When the etched texture is a matte texture, the surface of the glass member may be directly in contact with the etching solution, and matte textures with different matte levels may be obtained by adjusting components of the etching solution and an etching time. In addition, it should be noted that because the etched texture is formed by directly etching the glass member. To better ensure the mechanical properties of the glass, a step of chemical strengthening may be performed on the glass member after the etched texture is formed.

According to an embodiment of this application, the optical coating layer may be formed by using a coating method, for example, including, but not limited to, methods such as vacuum coating (such as vacuum evaporation coating or vacuum sputtering coating) and chemical coating. Specific coating parameters may be flexibly adjusted and selected by a person skilled in the art according to actual situations. Therefore, the operation is simple and convenient, and the process is mature, which are beneficial to industrial production.

According to an embodiment of this application, the pattern layer may be formed by using a screen-printing method. Specifically, ink may be poured on an end of a screen-printing forme, a printing squeegee is used to apply a specific pressure to an ink position on the screen-printing forme while being moved toward the other end of the screen-printing forme, and the ink is squeezed from a mesh of an image text part onto a printing substrate by the squeegee during the movement. Specific screen-printing parameters may be flexibly selected by a person skilled in the art according to specific requirements. Therefore, a pattern layer with a target shape can be obtained conveniently and quickly, and the operation is convenient, simple, and fast, which is suitable for industrial production.

S300. Place the glass members and an adhesive film alternately in a stacked manner, to obtain a stacked structure.

According to an embodiment of this application, the adhesive film may be a pre-made film, or may be formed after directly paste is coated on the surfaces of the decorative layers or the surfaces of the glass members and is subject to a UV photo-curing process. Therefore, an application scope is wider.

According to an embodiment of this application, the glass members and the adhesive film may be placed alternately in a stacked manner manually or through operation of an automated device. To obtain laminated glass with better usability and higher accuracy, the glass members and the adhesive film need to be positioned while being placed alternately in a stacked manner, so that the glass members and the adhesive film are accurately aligned, and have a better matching degree, thereby effectively avoiding various defects in machining processes, and improving the usability of the obtained laminated glass. In some embodiments of this application, the positioning is performed by using a positioning fixture or a CCD image sensor. Specifically, the glass member, the adhesive film, and the glass member may be placed in the positioning fixture sequentially, or a glass member, an adhesive film, and the glass member may be disposed in a stacked manner sequentially by using the CCD image sensor with high precision. Therefore, it can be ensured that the glass members and the adhesive film are aligned and matched accurately, which is beneficial to improving the degree of matching between the glass members and the adhesive film, thereby further improving the appearance and usability, such as optical properties and mechanical properties, of the obtained laminated glass.

S400. Sequentially vacuumize, heat, and pressurize the stacked structure to obtain laminated glass.

According to an embodiment of this application, in this step, the stacked structure may be placed in an autoclave for vacuumizing, where a specific type of the autoclave used is not particularly limited, and may be any known autoclave in the art. According to an embodiment of this application, to ensure that the adhesive film and the glass members are aligned accurately, the positioning fixture and the stacked structure may be placed in the autoclave together in this step.

According to an embodiment of this application, in this step, the vacuumizing is performed at room temperature for 30 to 60 min, for example, 30 min, 35 min, 40 min, 45 min, 50 min, 55 min, or 60 min. Therefore, gas in a vacuum bag can be exhausted, which is beneficial to reducing bubbles of the laminated glass obtained. In addition, within the foregoing time range, the gas can be effectively exhausted without wasting time and increasing costs due to excessively long time.

It should be noted that the description "room temperature" used in this specification refers to 20 to 40°C, for example, 20°C, 21°C, 22°C, 23°C, 24°C, 25°C, 26°C, 27°C, 28°C, 29°C, 30°C, 35°C, or 40°C.

According to an embodiment of the present invention, in this step, the pressurizing and heating can make the glass members and the adhesive film firmly combined, and the pressurizing can further remove bubbles from the stacked structure, so that the obtained laminated glass basically has no bubble, have the glass members and the adhesive film tightly combined, and have both relatively good optical properties and relatively good mechanical properties. Specifically, the pressurizing and heating the stacked structure may include: heating the stacked structure to 90 to 150°C (for example, 90°C, 95°C, 100°C, 105°C, 110°C, 115°C, 120°C, 125°C, 130°C, 135°C, 140°C, 145°C, or 150°C), pressurizing the stacked structure to 0.5 to 0.7 MPa (for example, 0.5 MPa, 0.55 MPa, 0.6 MPa, 0.65 MPa, or 0.7 MPa), and keeping the temperature and the pressure for 30 to 60 min (for example, 30 min, 35 min, 40 min, 45 min, 50 min, 55 min, or 60 min); and then, continuing to heat the stacked structure to 130 to 160°C (for example, 130°C, 135°C, 140°C, 145°C, 150°C, 155°C, or 160°C), pressurizing the stacked structure to 1.2 to 1.5 MPa (for example, 1.2 MPa, 1.25 MPa, 1.3 MPa, 1.35 MPa, 1.4 MPa, 1.45 MPa, or 1.5 MPa), and keeping the temperature and the pressure for 30 to 60 min (for example, 30 min, 35 min, 40 min, 45 min, 50 min, 55 min, or 60 min). Therefore, the glass members can be firmly combined through the adhesive film, and moreover, bubbles can be effectively removed from the stacked structure, so that the obtained laminated glass has both relatively good optical properties and relatively good mechanical properties.

According to an embodiment of this application, to better present an appearance effect, the method further includes forming a base color layer on a lower surface of a glass member located in a lowermost layer. Therefore, not only a richer appearance effect can be well presented, but also the decorative layer is not blocked. Specifically, a specific color of the base color layer is not particularly limited, and may be flexibly selected by a person skilled in the art according to actual requirements. Moreover, the base color layer may be a single-layer structure or a multi-layer structure, for example, may be a lacquer layer or an ink layer with a predetermined color, or may include a plurality of base lacquer layers and a plurality of color lacquer layers. A specific method for forming the base color layer includes, but is not limited to, a method such as coating, spraying, or printing, so that the operation is simple and fast, the process is mature, and the costs are low, leading to suitability for industrial production.

According to some specific embodiments of this application, processes, such as cutting, CNC machining, edge-sweeping and hole-sweeping, and polishing, can be performed on ultra-thin glass with a thickness of 0.2 mm to 0.5 mm (for 3D glass, a hot bending process needs to be added before the polishing), to obtain a plurality of glass members; surfaces of at least two glass members facing toward the adhesive film are etched to form etched textures respectively; then a plurality of glass members are chemically strengthened, and are coated with optical coating layers of different colors respectively, to form optical coating layers respectively on a plurality of surfaces with etched textures formed; and a pattern layer (such as a logo or a window pattern) is screen-printed on a surface of the optical coating layer close to the adhesive film. An adhesive film (for example, a PVB, EVA, or SGP film) with a thickness of 0.025 to 0.01 mm is cut by using laser or a die cutting method into a size of a planar expanded view of the glass members. Then the glass members and the adhesive film are alternately placed in a positioning fixture sequentially. The stacked structure placed in the fixture is positioned and then, placed into the autoclave. A device cavity is first vacuumized at room temperature for 30 to 60 min, then baked for 30 to 60 min after the temperature is increased to 90 to 150°C and the pressure is increased to 0.5 to 0.7 MPa, and the temperature is continued to be increased to 130 to 160°C, and the pressure is continued to be increased to 1.2 to 1.5 MPa. The temperature and the pressure are kept for 30 to 60 min, and finally the pressure is decreased after the temperature is decreased to room temperature. Then bonding of the adhesive film and combination of the glass members are completed. The laminated glass obtained after the combination can present rich texture effects and optical effects through coordination between different etchings, coatings, and screen-printings.

Therefore, the method is simple in terms of steps, easy to operate, mature in terms of a process, and suitable for industrial production. In addition, the obtained laminated glass has an appearance with different textures, patterns, and colors superimposed, and presents multiple levels, a special optical color, and gorgeous visual effect.

Embodiments of this application are described in detail below.

### Embodiment 1

Both a first glass member (lower glass) and a second glass member (upper glass) are 2.5D glass with a thickness of 0.4 mm, a thickness of a PVB film is 0.05 mm, and a process of combining two layers of 2.5D glass is performed.

A manufacturing process thereof is: (1) performing processes, such as slicing, CNC machining, edge sweeping and hole sweeping, and polishing, on the upper glass and the lower glass with the thickness of 0.4 mm; (2) performing gradient etching on the upper glass from top to middle, where an etching time is controlled to achieve an effect that a matte level in the middle is low and gradually increases above the middle (a longer etching time indicates a greater matte level); and performing the gradient etching on the lower glass from bottom to middle, where the etching time is controlled to achieve an effect that a matte level in the middle is low and gradually increases below the middle; (3) strengthening the foregoing etched glass members; (4) coating the strengthened upper glass and the strengthened lower glass with blue and purple optical coating layers respectively; (5) screen-printing a logo on the upper glass coated with the optical coating layer, and baking at 150°C for 30 min; (6) first placing the lower glass into a fixture, then placing a laser-cut PVB film, and finally placing the upper glass, where a positioning manner thereof may be implemented through the fixture, CCD, or the like. The product placed in the fixture is positioned and then, placed into the autoclave. A device cavity is first vacuumized at room temperature for 30 min, then baked for 30 min after the temperature is increased to 100°C and the pressure is increased to 0.5 MPa, and the temperature is continued to be increased to 160°C, and the pressure is continued to be increased to 1.5 MPa. The temperature and the pressure are kept for 60 min, and finally the pressure is decreased after the temperature is decreased to room temperature. Then the bonding of the film and the combination of the glass are completed. Therefore, a colorful effect that gradually changes from middle to both sides is achieved.

### Embodiment 2

Both a first glass member (lower glass) and a second glass member (upper glass) are 2.5D glass with a thickness of 0.4 mm, a thickness of a PVB film is 0.05 mm, and a process of combining two layers of 2.5D glass is performed.

A manufacturing process thereof is: (1) performing processes, such as slicing, CNC machining, edge sweeping and hole sweeping, and polishing, on the upper glass and the lower glass with the thickness of 0.4 mm; (2) performing different texture etchings on the upper glass and the lower glass respectively; (3) strengthening the foregoing etched glass; (4) coating the strengthened upper glass and the strengthened lower glass with blue and red optical coating layers respectively; (5) screen-printing the lower glass coated with the optical coating layer with an ink pattern, and baking at 150°C for 30 min; (6) first placing the lower glass into a fixture, then placing a laser-cut PVB film, and finally placing the upper glass, where a positioning manner thereof may be implemented through the fixture, CCD, or the like. The product placed in the fixture is positioned and then, placed into the autoclave. A device cavity is first vacuumized at room temperature for 30 min, then baked for 30 min after the temperature is increased to 100°C and the pressure is increased to 0.5 MPa, and the temperature is continued to be increased to 160°C, and the pressure is continued to be increased to 1.5 MPa. The temperature and the pressure are kept for 60 min, and finally the pressure is decreased after the temperature is decreased to room temperature. Then the bonding of the film and the combination of the glass are completed. Therefore, superimposed and rich texture effects are achieved.

### Embodiment 3

Upper glass is 2.5D glass with a thickness of 0.55 mm, lower glass is 2.5D glass with a thickness of 0.25 mm, a thickness of a PVB film is 0.1 mm, and a process of combining two layers of 2.5D glass is performed.

A manufacturing process thereof is: (1) performing processes, such as slicing, CNC machining, edge sweeping and hole sweeping, and polishing, on the upper glass and the lower glass; (2) performing different texture etchings on the upper glass and the lower glass respectively; (3) strengthening the foregoing etched glass; (4) coating a lower surface of the upper glass with different quantities of optical coating layers with different thicknesses by using different target materials, to present a blue gradient, and coating an upper surface of the lower glass with different quantities of optical coating layers with different thicknesses by using different target materials, to present a red gradient; (5) screen-printing an upper surface of the lower glass coated with the optical coating layer with an ink pattern, and baking at 150°C for 30 min; and (6) first placing the lower glass into a fixture, then placing a laser-cut PVB film, and finally placing the upper glass, where a positioning manner thereof may be implemented through the fixture, CCD, or the like. The product placed in the fixture is positioned and then, placed into the autoclave. A device cavity is first vacuumized at room temperature for 30 min, then baked for 30 min after the temperature is increased to 100°C and the pressure is increased to 0.5 MPa, and the temperature is continued to be increased to 160°C, and the pressure is continued to be increased to 1.5 MPa. The temperature and the pressure are kept for 60 min, and finally the pressure is decreased after the temperature is decreased to room temperature. Then the bonding of the film and the combination of the glass are completed. Therefore, rich and colorful gradient texture effects are achieved, and a problem that single-layer glass can only achieve a gradient effect of a film layer with relatively close colors is resolved.

### Embodiment 4

Upper glass is 2.5D glass with a thickness of 0.55 mm, lower glass is 2.5D glass with a thickness of 0.25 mm, a thickness of a PVB film is 0.1 mm, and a process of combining two layers of 2.5D glass is performed.

A manufacturing process thereof is: (1) performing processes, such as slicing, CNC machining, edge sweeping and hole sweeping, and polishing, on the upper glass and the lower glass; (2) performing different texture etchings on the upper glass and the lower glass respectively; (3) strengthening the foregoing etched glass; (4) coating a lower surface of the upper glass with different quantities of optical coating layers with different thicknesses by using different target materials, to present a purple gradient, and coating an upper surface of the lower glass with different quantities of optical coating layers with different thicknesses by using different target materials, to present an orange gradient; (5) screen-printing an upper surface of the lower glass coated with the optical coating layer with an ink pattern, and baking at 150°C for 30 min; and (6) first placing the lower glass into a fixture, then placing a laser-cut PVB film, and finally placing the upper glass, where a positioning manner thereof may be implemented through the fixture, CCD, or the like. The product placed in the fixture is positioned and then, placed into the autoclave. A device cavity is first vacuumized at room temperature for 30 min, then baked for 30 min after the temperature is increased to 100°C and the pressure is increased to 0.5 MPa, and the temperature is continued to be increased to 160°C, and the pressure is continued to be increased to 1.5 MPa. The temperature and the pressure are kept for 60 min, and finally the pressure is decreased after the temperature is decreased to room temperature. Then the bonding of the film and the combination of the glass are completed. Therefore, rich and colorful gradient texture effects are achieved through refraction of different colors, and a problem that single-layer glass can only achieve a gradient effect of a film layer with relatively close colors is resolved.

### Embodiment 5

Upper glass, middle glass, and lower glass are all 2.5D glass with a thickness of 0.25 mm, a thickness of a PVB film is 0.075 mm, and a process of combining three layers of 2.5D glass is performed.

A manufacturing process thereof is: (1) performing processes, such as slicing, CNC machining, edge sweeping and hole sweeping, and polishing, on the upper glass, the middle glass, and the lower glass; (2) performing texture etching on a lower surface of the upper glass; (3) strengthening the upper glass, the middle glass, and the lower glass; (4) coating the strengthened upper glass, the strengthened middle glass, and the strengthened lower glass with a red optical coating layer respectively; (5) screen-printing a lower surface of the upper glass coated with the optical coating layer with ink, and baking at 150°C for 30 min; and (6) first placing the lower glass into a fixture, and then placing a laser-cut PVB film, the middle glass, a laser-cut PVB film, and the upper glass sequentially, where a positioning manner thereof may be implemented through the fixture, CCD, or the like. The product placed in the fixture is positioned and then, placed into the autoclave. A device cavity is first vacuumized at room temperature for 30 min, then baked for 30 min after the temperature is increased to 100°C and the pressure is increased to 0.5 MPa, and the temperature is continued to be increased to 160°C, and the pressure is continued to be increased to 1.5 MPa. The temperature and the pressure are kept for 60 min, and finally the pressure is decreased after the temperature is decreased to room temperature. Then the bonding of the film and the combination of the glass are completed. Therefore, a decorative effect of the ink layer in the middle of the glass is achieved, and the ink layer is prevented from being scratched in a subsequent assembly process.

### Embodiment 6

Embodiment 6 is the same as Embodiment 1 except for that before the combination, forming a base color layer on the lower surface of the lower glass is further included.

### Embodiment 7

Embodiment 7 is the same as Embodiment 5 except for that etching is also performed on an upper surface of the middle glass to form an etched texture, and a transparent optical coating layer is formed on the etched texture.

### Embodiment 8

Embodiment 8 is the same as embodiment 7 except for that no decorative layer is formed on the upper surface of the lower glass.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of this application. In this specification, schematic descriptions of the foregoing terms are not necessarily directed at the same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Although the embodiments of this application are shown and described above, it may be understood that the foregoing embodiments are exemplary, and cannot be understood as a limitation to this application.

## Claims

1. Laminated glass, comprising at least two glass members (10, 30) and at least one adhesive film (20, 50) disposed in a stacked manner, where the glass members (10, 30) and the adhesive film (20) are alternately disposed, wherein
decorative layers (40) are provided on surfaces of at least two of the glass members (10, 30) facing toward the adhesive film (20, 50), and at least two of the decorative layers (40) independently comprise an etched texture (41).

2. The laminated glass according to claim 1, comprising a first glass member (10), a first adhesive layer (20), and a second glass member (30) disposed in a stacked manner from bottom to top, wherein the decorative layers (40) are provided on both an upper surface of the first glass (10) member and a lower surface of the second glass member (30).

3. The laminated glass according to claim 1, comprising a first glass member (10), a second adhesive layer (50), a third glass member (60), a first adhesive layer (20), and a second glass member (30) disposed in a stacked manner from bottom to top, wherein the decorative layers (40) are provided on at least two of an upper surface of the first glass member (10), a lower surface of the second glass member (30), an upper surface of the third glass member (60), and a lower surface of the third glass member (60).

4. The laminated glass according to any one of claims 1 to 3, wherein thicknesses of at least two of the glass members (10, 30, 60) are independently 0.2 to 0.5 mm; and
a thickness of the adhesive film (20, 50) is 0.025 to 0.1 mm.

5. The laminated glass according to any one of claims 1 to 4, further comprising a base color layer, wherein the base color layer is disposed on a lower surface of the glass member (10, 30, 60) located in a lowermost layer.

6. The laminated glass according to any one of claims 1 to 5, wherein the etched texture (41) is formed by etching a surface of the glass members (10, 30, 60), wherein the etched texture (41) comprises at least one of a pattern texture, a striped texture, a matte texture, and a gradient texture.

7. The laminated glass according to any one of claims 1 to 6, wherein a material forming the adhesive film (20, 50) comprises at least one of polyvinyl butyral, an ethylene-methacrylate copolymer, an ionic film, an ethylene-vinyl acetate copolymer, thermoplastic polyurethane elastomer rubber, and propylene oxide.

8. An electronic device housing, wherein at least a part of the electronic device housing is formed of the laminated glass according to any one of claims 1 to 7.

9. A method for preparing the laminated glass according to any one of claims 1 to 7, comprising:
providing at least two glass members (10, 30, 60);
forming decorative layers (40) on at least two surfaces of the glass members (10, 30, 60);
placing the glass members (10, 30, 60) and an adhesive film (20, 50) alternately in a stacked manner, to obtain a stacked structure; and
sequentially vacuumizing, heating, and pressurizing the stacked structure to obtain laminated glass, wherein the forming the decorative layers (40) comprises the following step (1):
(1) etching the surfaces of the glass members (10, 30, 60) to form etched textures (41).

10. The method according to claim 9, wherein the sequentially vacuumizing, heating, and pressurizing the stacked structure comprises:
vacuumizing the stacked structure at room temperature for 30 to 60 min, increasing the temperature to 90 to 150°C, increasing the pressure to 0.5 to 0.7 MPa, and keeping the pressure for 30 to 60 min, and then increasing the temperature to 130 to 160°C, increasing the pressure to 1.2 to 1.5 MPa, and keeping the pressure for 30 to 60 min.

## Patentansprüche

1. Verbundglas, umfassend mindestens zwei Glaselemente (10, 30) und mindestens einen Klebefilm (20, 50), die gestapelt angeordnet sind, wobei die Glaselemente (10, 30) und der Klebefilm (20) abwechselnd angeordnet sind, wobei
Dekorschichten (40) auf den dem Klebefilm (20, 50) zugewandten Oberflächen von mindestens zwei der Glaselemente (10, 30) vorgesehen sind und mindestens zwei der Dekorschichten (40) unabhängig voneinander eine geätzte Textur (41) umfassen.

2. Verbundglas nach Anspruch 1, umfassend ein erstes Glaselement (10), eine erste Klebeschicht (20) und ein zweites Glaselement (30), die von unten nach oben gestapelt angeordnet sind, wobei die Dekorschichten (40) sowohl auf einer oberen Oberfläche des ersten Glaselements (10) als auch auf einer unteren Oberfläche des zweiten Glaselements (30) vorgesehen sind.

3. Verbundglas nach Anspruch 1, umfassend ein erstes Glaselement (10), eine zweite Klebeschicht (50), ein drittes Glaselement (60), eine erste Klebeschicht (20) und ein zweites Glaselement (30), die von unten nach oben gestapelt angeordnet sind, wobei die Dekorschichten (40) auf mindestens zwei von einer oberen Oberfläche des ersten Glaselements (10), einer unteren Oberfläche des zweiten Glaselements (30), einer oberen Oberfläche des dritten Glaselements (60) und einer unteren Oberfläche des dritten Glaselements (60) vorgesehen sind.

4. Verbundglas nach einem der Ansprüche 1 bis 3, wobei die Dicken von mindestens zwei der Glaselemente (10, 30, 60) unabhängig voneinander 0,2 mm bis 0,5 mm betragen; und
eine Dicke des Klebefilms (20, 50) 0,025 mm bis 0,1 mm beträgt.

5. Verbundglas nach einem der Ansprüche 1 bis 4, umfassend ferner eine Grundfarbschicht, wobei die Grundfarbschicht auf einer unteren Oberfläche des Glaselements (10, 30, 60) angeordnet ist, das sich in einer untersten Schicht befindet.

6. Verbundglas nach einem der Ansprüche 1 bis 5, wobei die geätzte Textur (41) durch Ätzen einer Oberfläche der Glaselemente (10, 30, 60) gebildet wird, wobei die geätzte Textur (41) mindestens eine von einer Mustertextur, einer gestreiften Textur, einer matten Textur und einer Gradiententextur umfasst.

7. Verbundglas nach einem der Ansprüche 1 bis 6, wobei ein Material, das den Klebefilm (20, 50) bildet, mindestens eines von Polyvinylbutyral, einem Ethylen-Methacrylat-Copolymer, einem ionischen Film, einem Ethylen-Vinylacetat-Copolymer, thermoplastischem Polyurethan-Elastomer-Kautschuk und Propylenoxid umfasst.

8. Gehäuse einer elektronischen Vorrichtung, wobei zumindest ein Teil des Gehäuses der elektronischen Vorrichtung aus dem Verbundglas nach einem der Ansprüche 1 bis 7 gebildet ist.

9. Verfahren zur Herstellung des Verbundglases nach einem der Ansprüche 1 bis 7, umfassend Folgendes:
Bereitstellen von mindestens zwei Glaselementen (10, 30, 60);
Bilden von Dekorschichten (40) auf mindestens zwei Oberflächen der Glaselemente (10, 30, 60);
abwechselndes Anordnen der Glaselemente (10, 30, 60) und eines Klebefilms (20, 50) in gestapelter Weise, um eine gestapelte Struktur zu erhalten; und
sequentielles Vakuumieren, Erhitzen und Unterdrucksetzen der gestapelten Struktur, um Verbundglas zu erhalten, wobei das Bilden der Dekorschichten (40) den folgenden Schritt (1) umfasst:
(1) Ätzen der Oberflächen der Glaselemente (10, 30, 60), um geätzte Texturen (41) zu bilden.

10. Verfahren nach Anspruch 9, wobei das sequentielle Evakuieren, Erhitzen und Unterdrucksetzen der gestapelten Struktur Folgendes umfasst:
Evakuieren der gestapelten Struktur bei Raumtemperatur für 30 bis 60 Minuten, Erhöhen der Temperatur auf 90°C bis 150°C, Erhöhen des Drucks auf 0,5 MPa bis 0,7 MPa und das Halten des Drucks für 30 bis 60 Minuten, sowie anschließendes Erhöhen der Temperatur auf 130°C bis 160°C, das Erhöhen des Drucks auf 1,2 MPa bis 1,5 MPa und das Halten des Drucks für 30 bis 60 Minuten.

## Revendications

1. Verre feuilleté, comprenant au moins deux éléments en verre (10, 30) et au moins un film adhésif (20, 50) disposés de manière empilée, dans lequel les éléments en verre (10, 30) et le film adhésif (20) sont disposés de manière alternative, dans lequel
des couches décoratives (40) sont prévues sur des surfaces d'au moins deux des éléments en verre (10, 30) faisant face au film adhésif (20, 50), et au moins deux des couches décoratives (40) comprennent indépendamment une texture gravée (41).

2. Verre feuilleté selon la revendication 1, comprenant un premier élément en verre (10), une première couche adhésive (20), et un deuxième élément en verre (30) disposés de manière empilée de bas en haut, dans lequel les couches décoratives (40) sont prévues à la fois sur une surface supérieure du premier élément en verre (10) et sur une surface inférieure du deuxième élément en verre (30).

3. Verre feuilleté selon la revendication 1, comprenant un premier élément en verre (10), une deuxième couche adhésive (50), un troisième élément en verre (60), une première couche adhésive (20) et un deuxième élément en verre (30) disposés de manière empilée de bas en haut, dans lequel les couches décoratives (40) sont prévues sur au moins deux parmi une surface supérieure du premier élément en verre (10), une surface inférieure du deuxième élément en verre (30), une surface supérieure du troisième élément en verre (60) et une surface inférieure du troisième élément en verre (60).

4. Verre feuilleté selon l'une quelconque des revendications 1 à 3, dans lequel des épaisseurs d'au moins deux des éléments en verre (10, 30, 60) sont indépendamment de 0,2 à 0,5 mm ; et
une épaisseur du film adhésif (20, 50) est de 0,025 à 0,1 mm.

5. Verre feuilleté selon l'une quelconque des revendications 1 à 4, comprenant en outre une couche de couleur de base, dans lequel la couche de couleur de base est disposée sur une surface inférieure de l'élément en verre (10, 30, 60) situé dans une couche la plus basse.

6. Verre feuilleté selon l'une quelconque des revendications 1 à 5, dans lequel la texture gravée (41) est formée en gravant une surface des éléments en verre (10, 30, 60), dans lequel la texture gravée (41) comprend au moins l'une parmi une texture à motif, une texture rayée, une texture mate et une texture en dégradé.

7. Verre feuilleté selon l'une quelconque des revendications 1 à 6, dans lequel un matériau formant le film adhésif (20, 50) comprend au moins l'un parmi le polyvinyle butyral, un copolymère éthylène-méthacrylate, un film ionique, un copolymère éthylène-acétate de vinyle, un caoutchouc en élastomère de polyuréthane thermoplastique, et l'oxyde de propylène.

8. Boîtier de dispositif électronique, dans lequel au moins une partie du boîtier de dispositif électronique est formé par le verre feuilleté selon l'une quelconque des revendications 1 à 7.

9. Procédé d'élaboration du verre feuilleté selon l'une quelconque des revendications 1 à 7, comprenant :
fournir au moins deux éléments en verre (10, 30, 60) ;
former des couches décoratives (40) sur au moins deux surfaces des éléments en verre (10, 30, 60) ;
placer les éléments en verre (10, 30, 60) et un film adhésif (20, 50) alternativement de manière empilée, pour obtenir une structure empilée ; et
exécuter une mise sous vide, un chauffage et une pressurisation successivement sur la structure empilée pour obtenir un verre feuilleté, la formation des couches décoratives (40) comprenant l'étape suivante (1) :
(1) graver les surfaces des éléments en verre (10, 30, 60) pour former des textures gravées (41).

10. Procédé selon la revendication 9, dans lequel la mise sous vide, le chauffage et la pressurisation successifs sur la structure empilée comprennent :
mettre la structure empilée sous vide à une température ambiante pendant 30 à 60 minutes, augmenter la température à 90 à 150 °C, augmenter la pression à 0,5 à 0,7 MPa, maintenir la pression pendant 30 à 60 minutes, puis augmenter la température à 130 à 160 °C, augmenter la pression à 1,2 à 1,5 MPa, et maintenir la pression pendant 30 à 60 minutes.
